# EUROPÄISCHE PATENTSCHRIFT

(11) **EP 1 037 769 B1**
(45) Veröffentlichungstag und Bekanntmachung des Hinweises auf die Patenterteilung: **30.07.2003**
(21) Anmeldenummer: 98941237.4
(22) Anmeldetag: 27.06.1998
(51) Int. Cl.: B60R 21/00, G01P 21/00

(54) **VERFAHREN UND VORRICHTUNG ZUM ÜBERWACHEN DER FUNKTIONSFÄHIGKEIT EINES CRASHSENSORS**
METHOD AND DEVICE FOR MONITORING THE OPERATIVENESS OF A CRASH SENSOR
PROCEDE ET DISPOSITIF POUR CONTROLER L'APTITUDE A FONCTIONNER D'UN DETECTEUR DE CHOC

(30) Priorität: 20.12.1997 DE 19757118
(43) Veröffentlichungstag der Anmeldung: 27.09.2000
(73) Patentinhaber: ROBERT BOSCH GMBH, 70442 Stuttgart (DE)
(72) Erfinder: KURSAWE, Frank, Tomioka-shi 37023 (JP); STÜTZLER, Frank-Jürgen, D-70180 Stuttgart (DE)
(86) Internationale Anmeldenummer: DE9801764
(87) Internationale Veröffentlichungsnummer: WO99032330

(56) Entgegenhaltungen:
- DE-A- 3 809 299
- DE-A- 4 201 468
- DE-A- 4 439 886
- DE-A- 19 712 773
- US-A- 4 950 915
- US-A- 5 373 722
- US-A- 5 433 101

## Beschreibung

### Stand der Technik

Die vorliegende Erfindung betrifft ein Verfahren und eine Vorrichtung zum Überwachen der Funktionsfähigkeit eines Crashsensors für eine Sicherheitseinrichtung zum Schutz von Fahrzeuginsassen, wobei ein Steuergerät das Sensor-Ausgangssignal auswertet und davon abhängig ein Auslösesignal für die Sicherheitseinrichtung erzeugt und wobei der Sensor kontinuierlich von einem Testsignal aktiviert wird und das als Reaktion darauf entstehende Sensorsignal als Überwachungssignal zum Steuergerät übertragen wird, in dem das Überwachungssignal detektiert und auf Abweichung gegenüber einer Soll-Größe überprüft wird.

Ein System zum Auslösen von Rückhaltemittel in einem Fahrzeug, bei dem ein von einer Sensoreinrichtung zur Aufprallerkennung geliefertes Beschleunigungssignal in einem zentralen Steuergerät ausgewertet wird, ist z.B. aus der DE 195 36 573 C1 bekannt. Ein eben solches System, bei dem ein zentral im Fahrzeug angeordnetes Steuergerät das von einem im Seitenbereich des Fahrzeugs angeordneten Deformationssensor gelieferte Signal auswertet und bei Überschreiten eines Schwellwertes ein Auslösesignal für Rückhalteeinrichtungen (z.B. Airbags) erzeugt, geht aus der DE 43 24 753 A1 hervor.

Aus der DE 44 39 886 A und der DE 38 09 299 A gehen Verfahren zum Überwachen der Funktionsfähigkeit eines Beschleunigungssensors der einleitend genannten Art hervor. Bei diesem bekannten Verfahren wird der Beschleunigungssensor für seine Funktionsprüfung zu einer Schwingung angeregt, die oberhalb des reale Crashituationen erfassenden Nutzfrequenzbande liegt. Die hohe Testfrequenz kann unter Umständen zu einem fehlerhaften Testergebnis führen, da in diesem Frequenzbereich fehlende akustische Signale eventuell den Sensor zu störenden Schwingungen veranlassen können.

Damit eine Sicherheitseinrichtung in einem Fahrzeug mit hoher Zuverlässigkeit arbeitet, ist es von entscheidender Bedeutung, daß die Crashsensoren (z.B. Beschleunigungssensoren, Deformationssensoren) ständig fehlerfrei funktionieren. Falls die Funktionsfähigkeit eines Crashsensors gestört ist, muß dies sofort im Fahrzeug signalisiert werden, damit erforderliche Reparaturmaßnahmen vorgenommen werden können.

Der Erfindung liegt daher die Aufgabe zugrunde, ein Verfahren und eine Vorrichtung der eingangs genannten Art anzugeben, mit der die Funktionsfähigkeit eines Crashsensors mit möglichst hoher Zuverlässigkeit und geringem Aufwand ständig überwacht werden kann.

### Vorteile der Erfindung

Die genannte Aufgabe wird mit den Merkmalen der Ansprüche 1 bzw. 6 dadurch gelöst, daß das Testsignal ein periodisches Signal ist, dessen Frequenz und Amplitude kleiner als die Frequenz und Amplitude des durch Crashvorgänge verursachten Sensor-Nutzsignals sind.

Zweckmäßige Weiterbildungen der Erfindung gehen aus den Unteransprüchen hervor. Danach wird eine fehlertolerante Signalübertragung vom Sensor zum Steuergerät dadurch erreicht, daß das Ausgangssignal des Sensors sigma-delta moduliert wird.

Vorzugsweise wird im Steuergerät das Überwachungssignal durch Tiefpaßfilterung vom Sensor-Nutzsignal getrennt und die Frequenz des Überwachungssignals mit einer Soll-Frequenz verglichen und auf Fehlfunktion des Sensors entschieden, wenn die Frequenzabweichung eine vorgebbare Schwelle überschreitet.

Erfindungsgemäß wird der Sensor laufend überwacht, wobei das Überwachungssignal zusammen mit dem Nutzsignal des Sensors übertragen wird, das eine Crashsituation wiedergebende Nutzsignal aber nicht durch das Überwachungssignal gestört wird.

### Beschreibung eines Ausführungsbeispiels

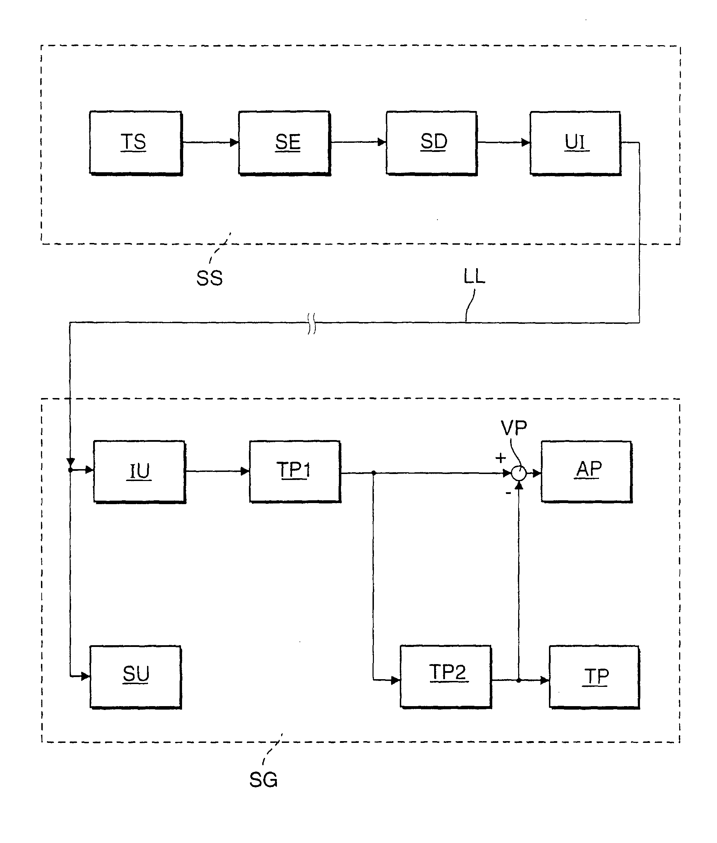

Anhand eines in der Zeichnung dargestellten Ausführungsbeispiels wird nachfolgend die Erfindung näher erläutert.

Die einzige Figur zeigt ein Blockschaltbild einer dezentral im Fahrzeug angeordneten Sensorschaltungseinheit SS und eines zentralen Steuergeräts SG, das über eine Übertragungsleitung LL mit der Sensorschaltungseinheit SS verbunden ist.

In der Sensorschaltungseinheit SS befindet sich ein Crashsensor SE. Dieser Crashsensor ist beispielsweise ein Beschleunigungssensor, der Beschleunigungen bzw. Verzögerungen des Fahrzeugs mißt. Auch kann der Crashsensor SE ein Deformationssensor sein, der die Deformationsgeschwindigkeit an einer bestimmten Stelle des Fahrzeugs mißt.

Mit dem Sensor SE ist ein Testsignalgenerator TS gekoppelt. dieser Testsignalgenerator TS erzeugt ein Testsignal zur Überwachung des Sensors SE. Auf das Testsignal reagiert der Sensor SE wie auf eine Beschleunigung oder Verzögerung oder Deformation. Wenn man z.B. davon ausgeht, daß es sich um einen kapazitiven Beschleunigungssensor SE handelt, so erfolgt die Kopplung des Testsignals mit dem Sensor SE, indem das Testsignal als elektrisches Feld eine Lageveränderung einer Elektrode des kapazitiven Sensors hervorruft. In jedem Fall muß das Testsignal auf mechanisch bewegbare Teile des Sensors - egal um welchen Sensortyp es sich handelt - eine Kraft ausüben.

Das Testsignal ist vorzugsweise ein periodisches Signal mit einer Amplitude, die in etwa einem Zehntel der Amplitude eines Nutzsignals entspricht, das der Sensor SE abgibt, wenn er auf eine tatsächliche Fahrzeugbeschleunigung, Verzögerung oder Deformation reagiert. Während im allgemeinen die Frequenzbandbreite eines Sensor-Nutzsignals zwischen 10 Hz und 400 Hz liegt, ist die Modulationsfrequenz des Testsignals weit unterhalb der Nutzsignalbandbreite, z.B. bei 1 Hz. Das Testsignal kann z.B. ein Dreiecksignal sein, das auf einfache Weise mittels eines Zählers und eines anschließenden Digital-Analog-Wandlers erzeugt wird.

Das Ausgangssignal des Sensors SE besteht nun aus der Überlagerung des Nutzsignals und eines durch das Testsignal verursachten, am Ausgang des Sensors SE erscheinenden Überwachungssignals. Da die Datenübertragung möglichst fehlertolerant sein soll, ist es zweckmäßig, auf das Ausgangssignal des Sensors SE die an sich bekannte Sigma-Delta-Modulation im Schaltblock SD anzuwenden.

In dem dargestellten Ausführungsbeispiel befindet sich am Ausgang der Sensorschaltungseinheit SS ein Spannungs-Strom-Wandler UI, der bewirkt, daß das sigma-delta-modulierte Ausgangssignal des Sensors SE in Form von Stromimpulsen übertragen wird. Das hat den Vorteil, daß die Spannung des Ausgangssignals unabhängig vom Signal selbst eingestellt werden kann und diese sich in einem vorgebbaren Bereich befindet. Liegt die Spannung des zum zentralen Steuergerät SG übertragenen Ausgangssignals oberhalb oder unterhalb des vorgegebenen Wertes, so kann davon ausgegangen werden, daß ein Fehler vorliegt, z.B. ein Kurzschluß oder ein Nebenschluß in der Sensorschaltungseinheit SS oder auf der Übertragungsleitung LL.

Eine Spannungsüberwachungsschaltung SU am Eingang des Steuergerätes SG vergleicht die Spannung des im Steuergerät SG ankommenden Sensorausgangssignals mit einem vorgegebenen Referenzwert. Wird dieser Referenzwert von der Spannung des Ausgangssignals über- oder unterschritten, muß ein Kurzschluß oder Nebenschluß vorliegen. Ein solcher Fehlerwird im Fahrzeug signalisiert. Es ist zweckmäßig, den über eine gewisse Zeit gemittelten Spannungspegel des Ausgangssignals mit dem Referenzwert zu vergleichen und daraus abzuleiten, ob ein Fehler vorliegt oder nicht.

Im Steuergerät SG bewirkt ein Strom-Spannungs-Wandler IU, daß das Sensor-Ausgangssignal als Spannungs-Signal weiterverarbeitet wird. Ein Tiefpaß TP1, dessen Durchlaßbandbreite auf die Nutzsignalbandbreite (400 Hz) des Sensors SE abgestimmt ist, befreit das Sensor-Ausgangssignal von höherfrequenten Störkomponenten.

Soll das Sensor-Ausgangssignal anschließend digital weiterverarbeitet werden, so findet eine Analog-Digital-Umsetzung im Anschluß an das Tiefpaßfilter TP1 statt (in der Zeichnung nicht dargestellt).

Von dem Sensor-Ausgangssignal wird ein Signalanteil abgezweigt und einem Tiefpaßfilter TP2 zugeführt, welches auf die Bandbreite des Überwachungssignals abgestimmt ist. Das ausgefilterte Überwachungssignal wird in einem Verknüpfungspunkt VP vom Sensor-Ausgangssignal subtrahiert, so daß am Ausgang des Verknüpfungspunktes VP das reine Nutzsignal anliegt. Ein Auslöseprozessor AP wertet das Nutzsignal des Sensors mit gewissen an sich bekannten Auslösealgorithmen aus und entscheidet, ob Rückhalteeinrichtungen ausgelöst werden sollen oder nicht.

Das vom Tiefpaßfilter TP2 ausgefilterte Überwachungssignal wird in einem Testsignalprozessor TP weiterverarbeitet. Dort findet eine Frequenzrückgewinnung statt, indem z.B. auf ganz einfache Weise die Nulldurchgänge des Überwachungssignals gezählt werden. Durch Vergleich der rückgewonnenen Frequenz mit einer Referenzfrequenz wird anschließend festgestellt, ob die Frequenzabweichung eine vorgebbare Schwelle überschreitet. Liegt die Frequenzabweichung zwischen der Frequenz des empfangenen Überwachungssignals und der Referenzfrequenz oberhalb der vorgebbaren Schwelle, so ist davon auszugehen, daß der Sensor SE nicht fehlerfrei arbeitet. Es erfolgt eine Fehlermeldung.

## Patentansprüche

1. Verfahren zum Überwachen der Funktionsfähigkeit eines Crashsensors für eine Sicherheitseinrichtung zum Schutz von Fahrzeuginsassen, wobei ein Steuergerät (SG) das Sensor-Ausgangssignal auswertet und davon abhängig ein Auslösesignal für die Sicherheitseinrichtung erzeugt und wobei der Sensor (SE) kontinuierlich von einem Testsignal aktiviert wird und das als Reaktion darauf entstehende Sensorsignal als Überwachungssignal zum Steuergerät (SG) übertragen wird, in dem das Überwachungssignal detektiert und auf Abweichung gegenüber einer Soll-Größe überprüft wird, **dadurch gekennzeichnet, daß** das Testsignal ein periodisches Signal ist, dessen Frequenz und Amplitude kleiner als die Frequenz und Amplitude des durch Crashvorgänge verursachten Sensor-Nutzsignals sind.

2. Verfahren nach Anspruch 1, **dadurch gekennzeichnet, daß** das Ausgangssignal des Sensors (SE) sigma-delta-moduliert zum Steuergerät (SG) übertragen wird.

3. Verfahren nach Anspruch 1, **dadurch gekennzeichnet, daß** das Sensor-Ausgangssignal in Form von Stromimpulsen übertragen wird.

4. Verfahren nach Anspruch 1, **dadurch gekennzeichnet, daß** im Steuergerät (SG) das Überwachungssignal durch Tiefpaßfilterung (TP1) vom Nutzsignal getrennt wird und daß die Frequenz des Überwachungssignals mit einer Referenzfrequenz verglichen wird und auf Fehlfunktion des Sensors entschieden wird, wenn die Frequenzabweichung eine vorgebbare Schwelle überschreitet.

5. Vorrichtung zum Überwachen der Funktionsfähigkeit eines Crashsensors für eine Sicherheitseinrichtung zum Schutz von Fahrzeuginsassen, wobei ein Steuergerät (SG) das Sensor-Ausgangssignal auswertet und davon abhängig ein Auslösesignal für die Sicherheitseinrichtung erzeugt und wobei Mittel (TS) vorhanden sind, welche den Sensor (SE) mit einem kontinuierlichen Testsignal aktivieren, und das Steuergerät (SG) das als Reaktion auf das Testsignal entstehende Sensorsignal als Überwachungssignal detektiert und auf Abweichung gegenüber einer Soll-Größe überprüft, **dadurch gekennzeichnet, daß** das Testsignal ein periodisches Signal ist, dessen Frequenz und Amplitude kleiner sind als die Frequenz und Amplitude des durch Craschvorgänge verursachten Sensor-Nutzsignals.

6. Vorrichtung nach Anspruch 5, **dadurch gekennzeichnet, daß** im Steuergerät (SG) Mittel (TP2, TP) vorhanden sind, die das Überwachungssignal durch Tiefpaßfilterung vom Nutzsignal, das durch tatsächliche Crashvorgänge entsteht, trennen und die Frequenz des Überwachungssignals mit einer Referenzfrequenz vergleichen und auf Fehlfunktion des Sensors (SE) entscheiden, wenn die Frequenzabweichung eine vorgebbare Schwelle überschreitet.

## Claims

1. Method for monitoring the operativeness of a crash sensor for a safety device for protecting vehicle occupants, a controller (SG) evaluating the sensor output signal and generating a triggering signal for the safety device as a function thereof, and the sensor (SE) being continuously activated by a test signal and the sensor signal which is produced in reaction thereto being transmitted as a monitoring signal to the controller (SG) in which the monitoring signal is detected and is checked for difference from a setpoint variable, **characterized in that** the test signal is a periodic signal whose frequency and amplitude are lower than the frequency and amplitude of the sensor useful signal which is brought about by crash processes.

2. Method according to Claim 1, **characterized in that** the output signal of the sensor (SE) is transmitted to the controller (SG) with a sigma-delta modulation.

3. Method according to Claim 1, **characterized in that** the sensor output signal is transmitted in the form of current pulses.

4. Method according to Claim 1, **characterized in that** in the controller (SG) the monitoring signal is separated from the useful signal by low-pass filtering (TP1), and **in that** the frequency of the monitoring signal is compared with a reference frequency and it is decided that the sensor is malfunctioning if the frequency deviation exceeds a predefinable threshold.

5. Device for monitoring the operativeness of a crash sensor for a safety device for protecting vehicle occupants, a controller (SG) evaluating the sensor output signal and generating a triggering signal for the safety device as a function thereof, and there being means (TS) which activate the sensor (SE) with a continuous test signal, and the controller (SG) detecting the sensor signal, produced in reaction to the test signal, as a monitoring signal and checking for difference from a setpoint variable, **characterized in that** the test signal is a periodic signal whose frequency and amplitude are lower than the frequency and amplitude of the sensor useful signal which is brought about by crash processes.

6. Device according to Claim 5, **characterized in that** in the controller (SG) there are means (TP2, TP) which, by means of low-pass filtering, separate the monitoring signal from the useful signal which is produced by actual crash processes, and compare the frequency of the monitoring signal with a reference frequency, and decide that the sensor (SE) is malfunctioning if the frequency deviation exceeds a predefinable threshold.

## Revendications

1. Procédé pour surveiller l'aptitude au fonctionnement d'un détecteur de choc pour une installation de sécurité destinée à protéger les occupants d'un véhicule, selon lequel un appareil de commande (SG) exploite le signal de sortie du détecteur et produit en fonction de cela un signal de déclenchement pour l'installation de sécurité, et le détecteur (SE) est continuellement activé par un signal de test et le signal de détecteur produit en réaction est transmis en tant que signal de surveillance à l'appareil de commande (SG), dans lequel le signal de surveillance est détecté et contrôlé sur des écarts par rapport à une valeur de consigne,
**caractérisé en ce que**
le signal de test est un signal périodique dont la fréquence et l'amplitude sont inférieures à la fréquence et à l'amplitude du signal utile du détecteur produit par les événements du choc.

2. Procédé selon la revendication 1,
**caractérisé en ce que**
le signal de sortie du détecteur (SE) est transmis à l'appareil de commande (SG) sous forme de modulation sigma delta.

3. Procédé selon la revendication 1,
**caractérisé en ce que**
le signal de sortie du détecteur est transmis sous forme d'impulsions de courant.

4. Procédé selon la revendication 1,
**caractérisé en ce que**
dans l'appareil de commande (SG) le signal de surveillance est séparé du signal utile par une filtration passe-bas (TP1) et la fréquence du signal de surveillance est comparée à une fréquence de référence et on décide qu'il y a un fonctionnement défectueux lorsque l'écart de fréquence dépasse un seuil prédéfini.

5. Dispositif pour surveiller l'aptitude au fonctionnement d'un détecteur de choc pour une installation de sécurité destinée à protéger les occupants d'un véhicule, dans lequel un appareil de commande (SG) exploite le signal de sortie du détecteur et produit en fonction de cela un signal de déclenchement pour l'installation de sécurité, et des moyens (TS) activent le détecteur (SE) avec un signal de test continu et l'appareil de commande (SG) détecte en tant que signal de surveillance le signal de détecteur produit en réaction au signal de test et contrôle des écarts par rapport à une valeur de consigne,
**caractérisé en ce que**
le signal de test est un signal périodique dont la fréquence et l'amplitude sont inférieures à la fréquence et à l'amplitude du signal utile du détecteur produit par les événements du choc.

6. Dispositif selon la revendication 5,
**caractérisé en ce que**
l'appareil de commande (SG) comporte des moyens (TP2, TP) qui séparent par filtration passe-bas le signal de surveillance du signal utile qui résulte des événements réels de choc, et la fréquence du signal de surveillance est comparée à une fréquence de référence et on décide qu'il y a un fonctionnement défectueux lorsque l'écart de fréquence dépasse un seuil prédéfini.
